**Europäisches Patentamt**

**European Patent Office**

**Office européen des brevets**

(19)

(11) Veröffentlichungsnummer : **0 375 906 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **F16D 3/16,** F16D 3/18,
F16C 11/08

(21) Anmeldenummer : **89121129.4**

(22) Anmeldetag : **15.11.89**

(54) **Allseitig bewegliches Gelenk, insbesondere für Gestänge und Gelenkwellen.**

(30) Priorität : **24.12.88 DE 3843825**

(43) Veröffentlichungstag der Anmeldung :
**04.07.90 Patentblatt 90/27**

(45) Bekanntmachung des Hinweises auf die
Patenterteilung :
**15.04.92 Patentblatt 92/16**

(84) Benannte Vertragsstaaten :
**ES FR GB IT SE**

(56) Entgegenhaltungen :
**DE-C- 94 557**
**DE-C- 3 720 852**
**FR-A- 480 457**
**FR-A- 911 968**
**US-A- 3 089 232**

(73) Patentinhaber : **LEMFOERDER
METALLWAREN AG.
Postfach 1220
W-2844 Lemförde (DE)**

(72) Erfinder : **Ratzkowsky, Elke
An den Eichen 8
W-4515 Bad Essen 1 (DE)**
Erfinder : **Wagener, Keit
Gradweg 4
W-4516 Bissendorf 1 (DE)**

(74) Vertreter : **Bruse, Willy Hans Heinrich
Edisonstrasse 14
W-2800 Bremen 33 (DE)**

## Beschreibung

Die Erfindung betrifft ein allseitig bewegliches Gelenk, bei dem zwei Gelenkteile mit identisch ausgebildeten Kupplungsgliedern ineinandergreifen, zur allgemeinen Verwendung in Gestängen und Gelenkwellen in Stellantrieben, Steuerungen, Betätigungen, Regelungen und dergleichen.

Aus der FR-A-480 457 ist ein Gelenk bekannt, welches diese Gattungsmerkmale aufweist, jedoch aus metallischen Teilen besteht und für die Übertragung größerer Kräfte in einem Radgelenk eines Fahrzeuges ausgelegt ist. Das bekannte Gelenk ist auch gekapselt in einem mehrteiligen Gehäuse angeordnet.

Kreuzgelenke allgemeiner Bauart bestehen aus zwei Gabelteilen und dem Gelenkkreuz mit Gelenkzapfen, die in Gelenkaugen der Gabelarme einfassen. Eine vereinfachte Ausbildung eines Kreuzgelenkes ist aus der DE-PS 32 678 bzw. der US-PS 3,089,232 bekannt.

Hiernach sind die Kupplungsglieder für die miteinander zu verbindenden Wellen- oder Gestängeteile an deren Enden angegossen, wobei die Gußform zugleich die zu umgießenden Teile fixiert und einen Gelenkkörper formt. Eine vergleichbare Ausbildung zeigt auch die DE-PS 37 20 852, bei der ein Gelenkkörper mit einstückig angeformten Lagerzapfen durch Füllen der Gußform mit einem selbsttätig aushärtenden Kunststoff gebildet ist.

In jedem bekannten Falle sind die durch das Gelenk miteinander verbundenen Endteile der Gelenkwelle bzw. des Gestänges unterschiedlich ausgebildet und durch wenigstens ein weiteres Bauteil miteinander verbunden.

Ein von der Erfindung berührtes Gelenk ist bevorzugt zur Verwendung in Kraftfahrzeugen bestimmt. Die Verwendung in Büromaschinen, Haushaltsgeräten, Laborgeräten, Druck- und Papiermaschinen, Textilmaschinen, Spielzeugen, elektrischen, elektronischen und anderen Geräten, in denen an sich bekannte Kreuzgelenke eingesetzt werden können und die auftretenden Drehmomente relativ gering sind, ist ebenfalls eingeschlossen.

Aufgabe der Erfindung ist die Schaffung eines allseitig beweglichen Gelenks für Gelenkwellen oder Gestänge zur Übertragung eines relativ geringen Drehmoments, welches mit einem niedrigen Kostenaufwand herstellbar, schnell montierbar und ebenso demontierbar ist, so daß es gleichzeitig als Schnellkupplung Verwendung finden kann.

Die Erfindung löst diese Aufgabe durch Ausbildungsmerkmale nach dem Kennzeichen des Patentanspruches 1.

Nach diesem Vorschlag besteht das Gelenk somit aus zwei identisch konturierten Teilen, und zwar nicht nur an den Kupplungsgliedern, die aus einem leicht verarbeitbaren Kunststoff, zum Beispiel einem Polyamid, mit begrenzt elastischen Eigenschaften herstellbar sind. Alle Teile des Gelenks können somit in ein und derselben Form hergestellt werden. Die Verbindung der beiden das Gelenk bildenden Gelenkteile erfolgt durch Ineinanderstecken und Verschnappen beider Teile unter federnd elastischer Verformung.

Bei einer bevorzugten Ausführungsform weist jedes der beiden miteinander zu verbindenden Gelenkteile Kupplungsglieder aus einer Gabel mit einem an der Außenseite jedes der beiden Gabelarme koaxial zueinander angeordneten Gelenkzapfen und eine Gabel mit einem zum freien Ende hin offenen Schlitz in jedem der beiden Gabelarme für die Aufnahme des Gelenkzapfens des jeweils anderen Gelenkteiles auf, wobei die Gabelarme mit den Gelenkzapfen außen kugelförmig ausgebildet sind und in eine innere Kugelkontur der Gabelarme mit den Schlitzen einfassen. Zur Begrenzung des Beugewinkels bilden die Schlitze in den Gabelarmen mit ihrer Kehlung Anschläge für die Gelenkzapfen des jeweils anderen Gelenkteiles. An den den Kupplungsgliedern abgewandten Enden sind die Gelenkteile mit Befestigungsmitteln für ein Gestängeteil versehen.

Die Erfindungsmerkmale ermöglichen die Herstellung eines allseitig beweglichen Gelenks aus lediglich zwei Teilen in einer sehr großen Stückzahl auf rationelle Weise aus Kunststoff, so daß aus diesen Teilen für sehr unterschiedliche Anwendungszwecke allseitig bewegliche Gelenke zusammengesteckt werden können. Ein solches Gelenk hat mit einem begrenzten Beugewinkel eine einwandfreie Kreuzgelenkcharakteristik, kann in kleinsten, aber auch in größeren Abmessungen hergestellt werden, ist wartungsfrei, arbeitet ohne Schmierung, ist elektrisch isolierend, antimagnetisch und korrosionsbeständig. Es hat ein sehr geringes Gewicht und ist widerstandsfähig gegen viele aggressive Medien. Das leichte Zusammenstecken des Gelenkes und die ebenso leichte Demontage erlaubt es, Gelenke mit Ausbildungsmerkmalen nach der Erfindung auch als Schnellkupplung in Gestängen oder dergleichen vorzusehen, insbesondere wenn solche Gestänge ein allseitig bewegliches Gelenk zur Kompensation von Auslenkbewegungen erforderlich macht.

Auf der Zeichnung ist ein Ausführungsbeispiel der Erfindung dargestellt. Es zeigen in einem gegenüber der natürlichen Größe vergrößerten Maßstab:

Figur 1 eine Seitenansicht eines Gelenks nach der Erfindung,

Figur 2 einen Längsschnitt in einer Achsebene,

Figur 3 einen Querschnitt in einer Ebene durch die Gelenkachse,

Figur 4 eine Seitenansicht der Kupplungsglieder an einem Gelenkteil und

Figur 5 eine gegenüber Figur 4 um 90 Grad versetzte Seitenansicht.

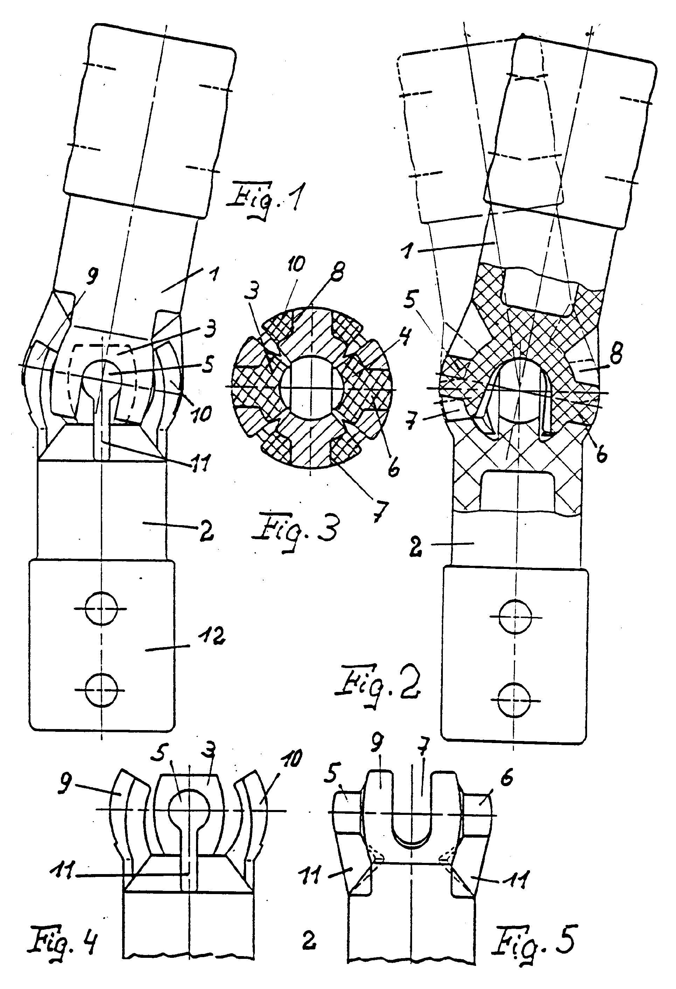

Das allseitig bewegliche Gelenk besteht aus lediglich zwei Gelenkteilen 1 und 2, deren einander zugewendete und miteinander verbindbare Enden identisch ausgeformte Kupplungsglieder aufweist. Beide Gelenkteile sind aus einem geeigneten Kunststoff, zum Beispiel einem Polyamid oder dergleichen, in einer Spritz- oder Gießform hergestellt. Die Kupplungsglieder an jedem der beiden Gelenkteile 1 und 2 bestehen einerseits aus einer Gabel mit einem an der Außenseite jedes der beiden Gabelarme 3 und 4 koaxial zueinander angeordneten Gelenkzapfen 5 und 6 sowie aus einer zweiten Gabel mit einem zum freien Ende hin offenen Schlitz 7 und 8 in jedem der beiden Gabelarme 9 und 10 für die Aufnahme der Gelenkzapfen 5 und 6 des jeweils anderen Gabelteiles. Zur besseren Übersicht sind in der Figur 3 die Bezugszeichen nur an die Kupplungsglieder des einen Gelenkteiles geführt und dieses Gelenkteil mit einer Kreuzschraffur gegenüber dem anderen Gelenkteil hervorgehoben, um so zu einer besseren Übersicht zu gelangen. Die Gabelarme 3 und 4 mit den angeformten Gelenkzapfen 5 und 6 sind außen kugelförmig ausgebildet und greifen in eine innere Kugelkontur der Gabelausbildungen 9 und 10 mit den Schlitzen 7 und 8 ein und bilden somit ein Kugelgelenk, dessen Beweglichkeit durch eine begrenzte Bewegungsfreiheit der Gelenkzapfen 5 und 6 in den Schlitzen 7 und 8 gewährleistet ist. Somit bilden die Kehlungen am Boden der Schlitze 7 und 8 Anschläge für die Gelenkzapfen 5 und 6, durch die der Beugewinkel des Gelenks begrenzt wird. Die Gabelarme 3 und 4 mit den Gelenkzapfen bilden eine innere Kugel eines Gelenkkörpers, die durch die kugelförmige Innenausbildung der Gabelarme 9 und 10 umschlossen wird und in diese äußere Kugelausbildung unter elastisch federnder Verformung der Gabelarme 9 und 10 mit einer Schnappbewegung eingesetzt werden kann. Die Begrenzung des Beugewinkels ist in der Figur 2 erkennbar. Zur Aussteifung des Gelenks können auf der Außenseite der die Gelenkzapfen 5 und 6 tragenden Gabelarme 3 und 4 Verstärkungsrippen 11 vorgesehen sein.

Die zuvor beschriebenen Kupplungsglieder der Gelenkteile können unmittelbar an den Enden von Gelenkwellen, Gestängen oder dergleichen angeformt sein. Vorteilhaft sind die Kupplungsglieder jedoch an Gelenkteilen ausgebildet, deren den Kupplungsgliedern gegenüberliegende Enden Mittel zur Verbindung mit einer Welle, einem Gestängeteil oder dergleichen aufweisen. Dargestellt sind auf der Zeichnung angeformte Muffen 12 mit inneren Bohrungen, in die Stangenenden, Wellenenden oder dergleichen einsteckbar und durch Querstifte fixierbar sind.

BEZUGSZEICHENLISTE:

--------------------

1 Gelenkteil

2 Gelenkteil

3 Gabelarm

4 Gabelarm

5 Gelenkzapfen

6 Gelenkzapfen

7 Schlitz

8 Schlitz

9 Gabelarm

10 Gabelarm

11 Versteifungsrippe

12 Muffe

**Patentansprüche**

1. Allseitig bewegliches Gelenk für Gestänge und Gelenkwellen, bei dem zwei Gelenkteile mit identisch ausgebildeten Kupplungsgliedern (3-10) ineinandergreifen, dadurch gekennzeichnet, daß es aus lediglich diesen beiden Gelenkteilen (1,2) aus einem elastisch verformbaren Kunststoff besteht, die mit einer Winkelversetzung von 90° unter federnder elastischer Verformung ineinandergesteckt sind.

2. Gelenk nach Anspruch 1, dadurch gekennzeichnet, daß jedes der beiden Gelenkteile (1,2) Kupplungsglieder aus einer Gabel mit einem an der Außenseite jedes der beiden Gabelarme (3,4) koaxial zueinander angeordneten Gelenkzapfen (5,6) und aus einer Gabel mit einem zum freien Ende hin offenen Schlitz (7,8) in jedem der beiden Gabelarme (9,10) für die Aufnahme der Gelenkzapfen (5,6) des jeweils anderen Gelenkteiles aufweist, wobei die Gabelarme (3,4) mit den Gelenkzapfen (5,6) außen kugelförmig ausgebildet sind und in eine innere Kugelkontur der Gabelarme (9,10) mit den Schlitzen (7,8) einfaßt.

3. Gelenk nach den Ansprüchen 1 und 2, dadurch gekennzeichnet, daß die Schlitze (7,8) in den Gabelarmen (9,10) zur Begrenzung des Beugewinkels des Gelenks mit ihrer Kehlung Anschläge für die Gelenkzapfen (5,6) bilden.

4. Gelenk nach den Ansprüchen 1 bis 3, dadurch gekennzeichnet, daß jedes der beiden Gelenkteile (1,2) an dem den Kupplungsgliedern abgewandten Ende Befestigungsmittel für ein Gestängeteil aufweist.

## Claims

1. Universally movable joint for linkages and cardan shafts, in which two joint parts with identically formed coupling members (3-10) interlock, characterised in that it consists solely of these two joint parts (1, 2) consisting of a resiliently deformable plastics material, which are inserted one into another by resilient deformation at an angular offset of 90°.

2. Joint according to claim 1, characterised in that each of the two joint parts (1, 2) has coupling members composed of a fork with a pivot mounted coaxially to one another on the outside of each of the two fork arms (3, 4) and of a fork with a slot (7, 8), open at the free end in each of the two fork arms (9, 10) for receiving the pivots (5, 6) of the respectively other joint part, the fork arms (3, 4) with the pivots (5, 6) being formed spherically on the outside and being mounted in an inner sphere contour of the fork arms (9, 10) with the slots (7, 8).

3. Joint according to claims 1 and 2, characterised in that the slots (7,8) in the fork arms (9, 10) form, with their groove, stops for the pivots (5, 6) in order to limit the bending angle of the joint.

4. Joint according to claims 1 to 3, characterised in that each of the two joint parts (1, 2) has on the end remote from the coupling members fixing means for part of a linkage.

## Revendications

1. Articulation mobile en tous sens destinée à des timoneries et des arbres de transmission, dans laquelle deux parties d'articulation s'engagent l'une dans l'autre par des organes d'accouplement (3-10) identiquement configurés, caractérisée en ce qu'elle est constituée uniquement de ces deux parties d'articulation (1,2) en matière plastique élastiquement déformable, qui sont emboîtées l'une dans l'autre, avec un décalage angulaire de 90 °, sous déformation élastique.

2. Articulation selon la revendication 1, caractérisée en ce que chacune des deux parties d'articulation (1,2) présente des organes d'accouplement constitués d'une fourche avec un pivot d'articulation (5,6) disposé sur le côté extérieur de chacun des deux bras de fourche (3,4), les pivots d'articulation (5,6) étant coaxiaux, et d'une fourche avec une fente (7,8), ouverte vers l'extrémité libre, pratiquée dans chacun des deux bras de fourche (9,10) et destinée à recevoir le pivot d'articulation (5,6) de l'autre partie d'articulation, les bras de fourche (3,4) munis des pivots d'articulation (5,6) étant réalisés extérieurement sphériques et étant inclus dans un contour intérieur sphérique des bras de fourche (9,10) munis des fentes (7,8).

3. Articulation selon la revendication 1 ou 2, caractérisée en ce que les fentes (7,8) des bras de fourche (9,10) forment par leur creusure, afin de limiter l'anple de "pliage" de l'articulation, des butées pour les pivots d'articulation (5,6).

4. Articulation selon l'une des revendications 1 à 3, caractérisée en ce que chacune des deux parties d'articulation (1,2) présente, à son extrémité éloignée des organes d'accouplement, des moyens de fixation pour un élément de timonerie.

Fig. 1

Fig. 3

Fig. 2

Fig. 4

Fig. 5

5